# EUROPEAN PATENT APPLICATION

(11) **EP 1 004 507 A2**
(43) Date of publication of application: **31.05.2000**
(21) Application number: 99122038.5
(22) Date of filing: 15.11.1999
(51) Int. Cl.: B64G 1/22, B64G 1/66, B64G 1/50

(54) **Spacecraft module with embedded heaters and sensors, and related method of manufacture**

(30) Priority: 25.11.1998 US 199715
(71) Applicant: TRW INC., Redondo Beach, CA 90278 (US)
(72) Inventor: Anderson, Joseph F., Ranco Palos Verdes, CA 90275 (US)
(74) Representative: Schmidt, Steffen J., Dipl.-Ing.

(57) **Abstract**

A technique for reducing the cost of manufacturing spacecraft, wherein many resistive heaters (14), and sensors (20) such as thermistors and strain gauges are integrated into a spacecraft equipment module (10 or 12) during fabrication. Prior to testing, selected heaters (14) and sensors (20) are activated through external connectors (18) to the equipment module (10 or 12). Prior to launch of the spacecraft, selected heaters and sensors needed during flight are activated and the heaters and sensors needed for test are deactivated.

## Description

### BACKGROUND OF THE INVENTION

This invention relates generally to spacecraft manufacture and testing and, more particularly, to techniques for testing spacecraft components on the ground. Manned and unmanned spacecraft have to be thoroughly tested on the ground and one goal of testing is to simulate actual operating conditions as closely as possible. For example, spacecraft are exposed to extremes of temperature because they are subject to cold conditions when in shade and to higher temperatures caused by solar heating.

Testing performance under various thermal conditions has been accomplished in the past by adding resistive heaters and temperature sensing thermistors to a spacecraft equipment module under test. A thermistor is a resistive component that has a high negative temperature coefficient of resistance, so that its resistance decreases with temperature. It forms the basis of a temperature sensing device. Typically, these heaters and thermistors are bonded onto the module under test, as called for by the testing procedures established for a particular spacecraft and mission. Adding heaters and thermistors by bonding after manufacture of the spacecraft equipment module is, of course, a highly labor intensive and, therefore, costly operation.

Some heaters and thermistors are needed during in-flight operation of the spacecraft, to sense temperatures and to make thermal adjustments by controlling heaters in various parts of the spacecraft. Other heaters and thermistors are needed only during ground testing but, for practical reasons, these components are left in place after testing. Removing them would involve further labor costs and would also risk possible damage to the spacecraft.

Strain gauges are also installed on some spacecraft equipment modules. Strain gauges are used to measure dimensional deflection or distortion of components, or to measure corresponding stresses that cause distortion. Typically, strain gauges are also installed by bonding to the existing module structure.

It would be highly desirable to eliminate or minimize the labor cost of installing heaters, thermistors and strain gauges into spacecraft equipment modules. The present invention achieves this goal.

### SUMMARY OF THE INVENTION

The present invention resides in a spacecraft equipment module, and a method for its manufacture, wherein heaters, thermistors and strain gauges are included in the module by design rather than being added later to meet specific testing and flight requirements. Briefly, and in general terms, the spacecraft equipment module of the invention comprises a structural substrate for supporting various spacecraft components; a plurality of resistive heaters integrated into the structural substrate; a plurality of conductive traces extending from the resistive heaters to at least one connector; a plurality of sensors integrated into the structural substrate; and a plurality of conductive traces extending from the sensors to at least one connector. Selected resistive heaters and sensors are activated through one or more of the connectors prior to testing and launch of a spacecraft in which the equipment module is installed. In one form of the invention the structural substrate is a flat panel, and the resistive heaters and conductive traces are formed in a conductive layer on the panel. More specifically, the sensors include thermistors and strain gauges. In another form of the invention, the structural substrate is a cylinder; and the resistive heaters and conductive traces are formed in a conductive layer on the cylinder.

In terms of a novel method, the invention comprises the steps of fabricating a structural substrate to support selected spacecraft components; forming in the structural substrate a plurality of resistive heaters integrated into the structural substrate; forming in the structural substrate a plurality of conductive traces extending from the resistive heaters to at least one connector; forming in the structural substrate a plurality of sensors integrated into the structural substrate; forming in the structural substrate a plurality of conductive traces extending from the sensors to at least one connector; and activating selected resistive heaters and sensors through one or more of the connectors prior to testing of the spacecraft equipment module. A larger number of resistive heaters and sensors are formed in the structural substrate than would normally be needed, to ensure availability of the resistive heaters and sensors for specific missions in which the spacecraft equipment module may be used.

The method may also include deactivating the heaters and sensors after use in testing and, prior to launch of a spacecraft in which the equipment module is installed, activating, through one or more of the connectors, selected resistive heaters and sensors needed for in-flight operation.

It will be appreciated from the foregoing that the present invention provides a novel approach to spacecraft design in that heaters and sensors needed for testing and for in-flight operations are integrated into each spacecraft equipment module in larger numbers than will be needed. Then, selected heaters and sensors are connected as needed through one or more external connectors to which the integrated heaters and sensors are internally wired. Other aspects and advantages of the invention will become apparent from the following more detailed description, taken in conjunction with the accompanying drawings.

### BRIEF DESCRIPTION OF THE DRAWINGS

FIG. 1 is a simplified view of spacecraft equipment module in the form or a panel, showing integral heaters and sensors;
FIG. 2 is a simplified view of a cylindrical spacecraft module in which integral heaters and sensors are installed; and
FIG. 3 is a sectional view taken substantially along the line 3-3 in either FIG. 1 or FIG. 2.

### DESCRIPTION OF THE PREFERRED EMBODIMENTS

As shown in the drawings for purposes of illustration, the present invention pertains to manufacture and testing of spacecraft equipment modules. In the past, thermal testing to simulate flight conditions has been accomplished by adding heaters and thermistors by bonding these components to an appropriate spacecraft equipment module prior to testing. Heaters and thermistors needed during flight are also added using the same labor-intensive technique. In some cases, strain gauges may also be added by bonding to the spacecraft module as needed.

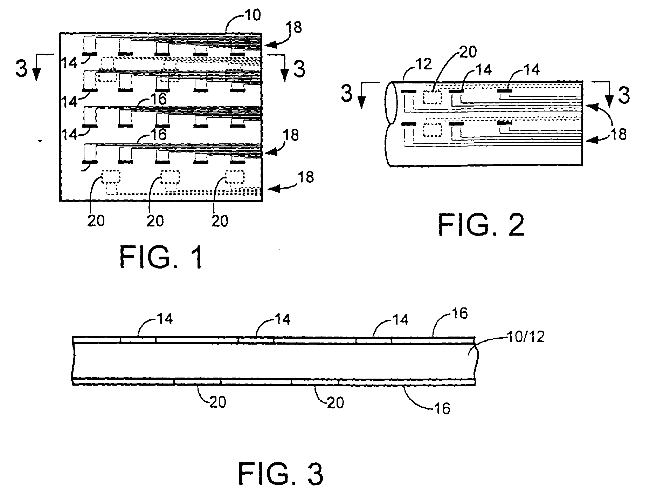

In accordance with the present invention, heaters and sensors of various types are integrated into the spacecraft module during manufacture. An important aspect of the invention is that relatively large numbers of heaters and sensors are installed on the module, which may, for example, take the form of a panel 10 (FIG. 1) or of a cylinder 12 (FIG.2). Heaters 14 take the form of resistive traces in a metal layer on the module surface. For example, if the module base material is graphite, an aluminum layer may be formed over the graphite and then selectively etched away using conventional photolithographic techniques, to define the resistive heaters 14 and conductive traces 16 used to connect the heaters to a connector 18 at an edge of the module, where appropriate connections may be made for testing. Similarly, sensors 20, which may be thermistors, strain gauges or other devices, are designed into the panel 10 or cylinder 12 and connections are brought out to one or more convenient connection points on the panel or cylinder.

In the manufacturing process, relatively large numbers of heaters and sensors are integrated into the equipment panel, cylinder or other type of module. For reasons of efficiency, the modules may be mass produced for use in different spacecraft and different missions and may carry different sub-modules with different thermal requirements. At the time that a module is configured for a specific mission, selected heaters and sensors are activated by means of simple external wiring connections. Similarly, additional heaters and sensors needed solely for testing are activated temporarily through external wiring, a process that is many times less expensive than customizing the installation of bonded heaters and sensors.

It will be appreciated from the foregoing that the present invention represents a significant advance in the field of spacecraft manufacture and testing. In particular, the invention eliminates the installation of heaters and sensors by bonding to the spacecraft modules as needed. Instead, a more than sufficient number of heaters and sensors are integrated into each spacecraft equipment module during manufacture. Then selected heaters and sensors are activated as needed for testing and in-flight use. It will also be appreciated that, although a specific embodiment of the invention has been described in detail for purposes of illustration, various modifications may be made without departing from the spirit and scope of the invention. Accordingly, the invention should not be limited except as by the appended claims.

## Claims

1. A spacecraft equipment module, comprising:
a structural substrate for supporting various spacecraft components;
a plurality of resistive heaters integrated into the structural substrate;
a plurality of conductive traces extending from the resistive heaters to at least one connector;
a plurality of sensors integrated into the structural substrate; and
a plurality of conductive traces extending from the sensors to at least one connector;
wherein selected resistive heaters and sensors are activated through one or more of the connectors prior to testing and launch of a spacecraft in which the equipment module is installed.

2. A spacecraft equipment module as defined in claim 1, wherein;
the structural substrate is a flat panel; and
the resistive heaters and conductive traces are formed in a conductive layer on the panel.

3. A spacecraft equipment module as defined in claim 2, wherein:
the sensors include thermistors and strain gauges.

4. A spacecraft equipment module as defined in claim 1, wherein:
the structural substrate is a cylinder; and
the resistive heaters and conductive traces are formed in a conductive layer on the cylinder.

5. A spacecraft equipment module as defined in claim 4, wherein:
the sensors include thermistors and strain gauges.

6. A method of manufacturing a spacecraft equipment module, comprising the steps of:
fabricating a structural substrate to support selected spacecraft components;
forming in the structural substrate a plurality of resistive heaters integrated into the structural substrate;
forming in the structural substrate a plurality of conductive traces extending from the resistive heaters to at least one connector;
forming in the structural substrate a plurality of sensors integrated into the structural substrate; and
forming in the structural substrate a plurality of conductive traces extending from the sensors to at least one connector; and
activating selected resistive heaters and sensors through one or more of the connectors prior to testing of the spacecraft equipment module, wherein a larger number of resistive heaters and sensors are formed in the structural substrate than would normally be needed, to ensure availability of the resistive heaters and sensors for specific missions in which the spacecraft equipment module may be used.

7. A method as defined in claim 6, and further comprising the steps of:
deactivating the heaters and sensors after use in testing; and
prior to launch of a spacecraft in which the equipment module is installed, activating, through one or more or the connectors, selected resistive heaters and sensors needed for in-flight operation.
